# EUROPEAN PATENT SPECIFICATION

(11) **EP 2 826 402 B1**
(45) Date of publication and mention of the grant of the patent: **17.02.2016**
(21) Application number: 13306012.9
(22) Date of filing: 15.07.2013
(51) Int. Cl.: A47B 57/40, A47B 57/50, A47B 96/14, F16B 12/28

(54) **Vertical column configured to equip a lateral panel of a shelving device, lateral panel comprising such vertical columns and shelving device comprising such lateral panels**
Vertikale Säule zum Anbringen einer seitlichen Platte einer Regalvorrichtung, seitliche Platte mit solchen vertikalen Säulen und Regalvorrichtung mit solchen seitlichen Platten
Colonne verticale conçue pour équiper un panneau latéral d'un dispositif de rayonnage, panneau latéral comprenant de telles colonnes verticales et dispositif de rayonnage comprenant ces panneaux latéraux

(43) Date of publication of application: 21.01.2015
(73) Proprietor: HMY Group, 89470 Moneteau (FR)
(72) Inventor: Berthaud, Philippe, 89700 Tonnerre (FR); Hervieux, Philippe, 89113 Fleury la vallée (FR)
(74) Representative: Santarelli

(56) References cited:
- EP-A1- 1 044 632
- EP-A2- 0 217 144
- CA-A1- 920 987
- FR-A1- 2 392 627
- FR-A5- 2 130 856
- NL-A- 285 256
- US-A1- 2010 181 274
- US-A1- 2013 098 856

## Description

### FIELD OF THE INVENTION

The invention relates to vertical columns configured to equip a lateral panel that comprises a shelving device, in particular a shelving device that is configured to bear heavy loads.

The invention further relates to lateral panels comprising such vertical columns and also shelving devices comprising such lateral panels.

### BACKGROUND ART

Shelving devices that are configured to bear heavy loads generally have a plurality of rack sections extending along a longitudinal direction.

Each rack section comprises two lateral panels located substantially perpendicularly relative to the longitudinal direction and a plurality of beams which are each configured to be fastened to the two lateral panels and which each extend longitudinally between the two lateral panels.

Each lateral panel comprises two vertical columns fixedly connected to each other by the intermediary of spacers, one of the two vertical columns being located in front of the shelving device and the other of the two vertical columns being on back of the shelving device (opposite to the front).

Each vertical column has a plurality of openings each configured to receive a fastening member of a respective beam for assembling this beam to this vertical column.

The Netherlands patent application 285 256 describes a shelving device comprising a plurality of lateral panels having each two vertical columns and a plurality of spacers each disposed between and fastened to two vertical columns. The shelving device further comprises a plurality of beams having fastening members configured to be received and retained into respective receiving and retaining members of the vertical columns. Each receiving and retaining member has an opening and a stamped portion provided close to the opening, and the stamped portion protrudes from an internal surface of the respective vertical column and is configured to retain the fastening member of the respective beam.

The document CA920987A discloses a vertical column according to the preamble of claim 1.

### SUMMARY OF THE INVENTION

The invention is directed to a vertical column to equip a lateral panel that comprises a shelving device, which is improved and optimized and which is further convenient, simple, economic and easy to manufacture.

The invention accordingly provides a vertical column as defined in claim 1.

The vertical column according to the invention is configured both to receive and retain the fastening member of the beam. Indeed, the opening is configured to receive the fastening member and the stamped portion is configured to retain the fastening member when the beam is moved from a first position where the fastening member is in an insertion configuration to a second position where the fastening member is in a blocking configuration.

The stamped portion of the receiving and retaining member is configured so that a recess having a bottom is provided in the vertical column relative to one of the internal and external surfaces, whereas a protrusion is also provided in the vertical column relative to the other of the internal and external surfaces. The protrusion formed is configured to come into contact with the fastening member in order to retain it.

Thus, the receiving and retaining member, in particular the stamped portion, enables both to reduce thickness of the vertical column and use beam having conventional fastening member, while providing a retaining of the beam and thus ensuring a rigid assembly.

The stamped portion of the receiving and retaining member is easily formed for instance by a stamping step carried out with a punch device.

The vertical column according to the invention is thus improved and optimized compared to the above mentioned known vertical column, while being convenient, simple, economic and easy to manufacture.

According to features preferred as being very simple, convenient and economical for embodying the vertical column according to the invention:
- said vertical column has a general C-shape and comprises a main side having said at least one receiving and retaining member, two lateral sides each extending from said main side and facing each other, and two back sides each extending from one said lateral side and facing said main side;
- said main side comprises a plurality of said receiving and retaining members located vertically regularly by couple;
- at least one of said two back sides comprises at least one said receiving and retaining member facing said at least one receiving and retaining member of said main side;
- said vertical column further comprises at least one wall extending outside from one of said two back sides and having a plurality of fastening holes which are configured to receive a fastening piece for assembling at least one spacer that further comprises said lateral panel with said vertical column; and/or
- said vertical column has a thickness in a range comprised between around 1 mm and around 2mm and said at least one stamped portion is shifted from said external or internal surface of a value in a range comprised between around 0.25mm and around 0.75mm.

The invention further provides a lateral panel configured to equip a shelving device, comprising two vertical columns as described above and at least one spacer disposed between and fastened to both vertical columns.

The lateral panel according to the invention is thus improved and optimized, while being convenient, simple, economic and easy to manufacture.

According to features preferred as being very simple, convenient and economical for embodying the lateral panel according to the invention, each of said two vertical columns has a general C-shape and comprises a main side, two lateral sides each extending from said main side and facing each other, two back sides each extending from one said lateral side and facing said main side, and two walls each extending outside from one of said two back sides, said at least one spacer having end portions which are each sandwiched between respective said two walls.

The invention further provides a shelving device comprising at least two lateral panels as described above and a plurality of beams having fastening members configured to be received and retained into respective receiving and retaining members of said two vertical columns.

The shelving device according to the invention is thus improved and optimized, while being convenient, simple and economic.

According to further features preferred as being very simple, convenient and economical for embodying the shelving device according to the invention, said fastening member are formed by hooks which each comprises a base protruding from a body of a respective beam and a vertical extension which extends from said base and remote to said body; said body being configured to come into abutment against said external surface of said vertical column and said vertical extension being configured to frictionally engage with said internal surface of said vertical column at the level of said at least one stamped portion of said at least one receiving and retaining member.

### BRIEF DESCRIPTION OF THE DRAWINGS

The description of the invention as defined by the appended claims now continues with a detailed description of a preferred embodiment given hereinafter by way of non-limiting example and with reference to the appended drawings. In these drawings:
- Figure 1 is a perspective and schematic view of a shelving device configured to bear heavy loads, comprising two rack sections formed by three lateral panels and beams each located between and fastened to two lateral panels;
- Figure 2 illustrates one of the three lateral panels of the shelving device shown in Figure 1, taken isolated;
- Figure 3 is a partially perspective view of a vertical column of the lateral panel shown in Figure 2;
- Figure 4 is a perspective view of the detail A in Figure 3;
- Figure 5 is a perspective view of the detail B in Figure 2;
- Figure 6 is a schematic sectional view of the assembly of a beam shown in Figure 1 and a vertical column shown in Figure 3, where the beam is in an insertion configuration; and
- Figure 7 is a view similar to Figure 6, where the beam is in a blocking configuration.

### DETAILED DESCRIPTION OF PREFERED EMBODIMENTS

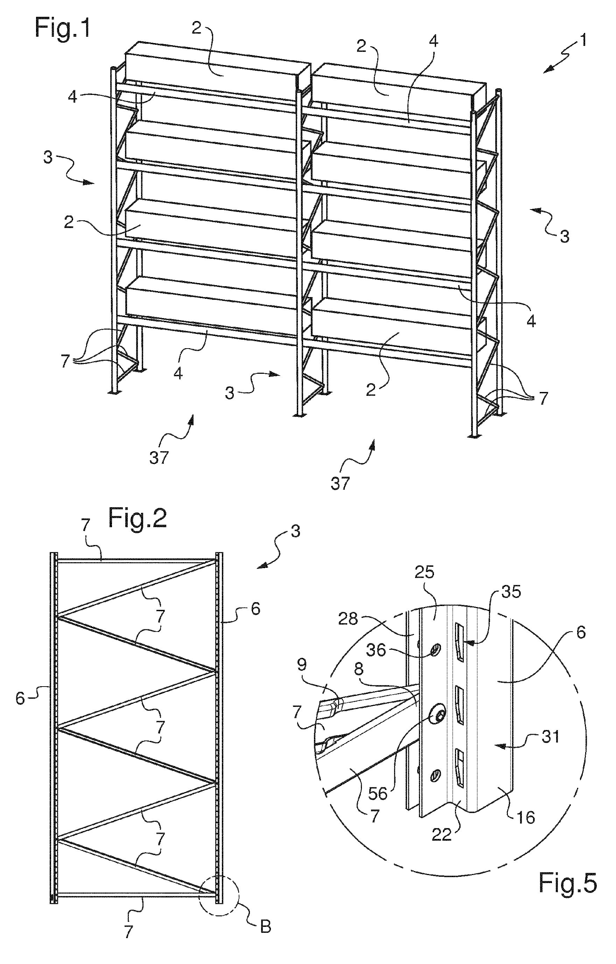

Figure 1 shows a shelving device 1 which is used to store a plurality of articles 2 for instance in a warehouse (not illustrated). The shelving device is configured to bear the articles 2 which are here heavy loads.

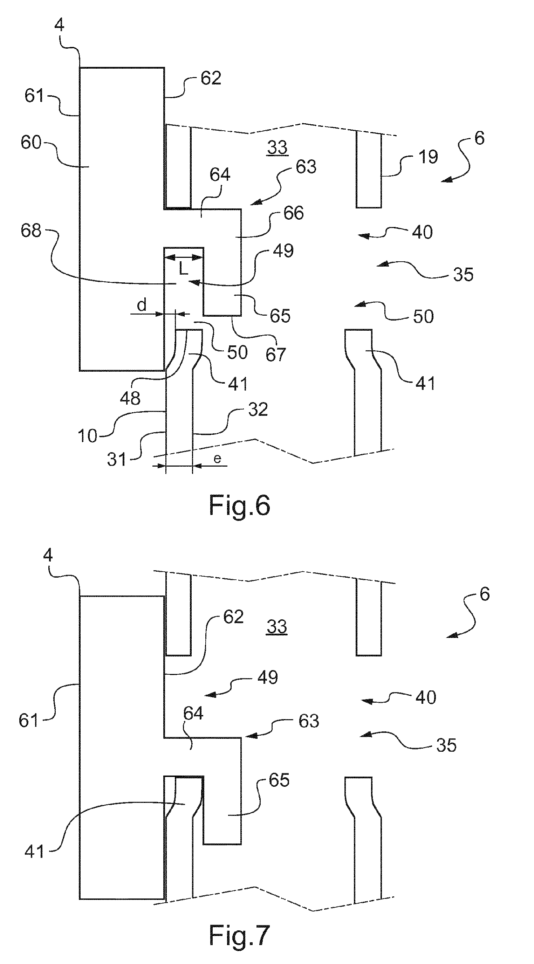

The shelving device 1 here comprises two rack sections 37 extending along a longitudinal direction, three lateral panels 3 located substantially perpendicularly relative to the longitudinal direction and a plurality of beams 4 which are each assembled with two lateral panels (by the intermediary of fastening members 63 visible Figures 6 and 7) and which each extend longitudinally between the two respective lateral panels.

Each rack section 37 is formed by two lateral panels 3 and a plurality of pairs of beams 4. Thus, one of the three lateral panels 3 is here common to the two rack sections 37.

Each lateral panel 3 comprises two vertical columns 6 fixedly connected to each other by the intermediary of spacers 7, one of the two vertical columns 6 being located in front of the shelving device 1 and the other of the two vertical columns being on back of the shelving device 1 (opposite to the front).

Each article 2 rely on a shelf (not illustrated) which is supported by a pair of beams 4 facing each other, one of the pair of beams being located in front of the shelving device 1 and the other of the pair of beams 4 being located on back of the shelving device 1.

As more visible in Figure 2 where a lateral panel 3 is taken isolated, the two vertical columns 6 are linked together and spaced from each other by the plurality of spacers 7.

Two of the spacers 7 are horizontally located relative to the vertical column 6 at the top and bottom of the lateral panel 3, while the other spacers 7 are arranged inclined relative to and disposed between the two horizontal spacers 7.

Each spacer 7 comprises two ends 8 which are opposite, ends on which are provided an aperture (not visible).

At least each inclined spacers 7 further comprises projections 9 configured to form an abutment, as visible and better described below in reference to Figure 5.

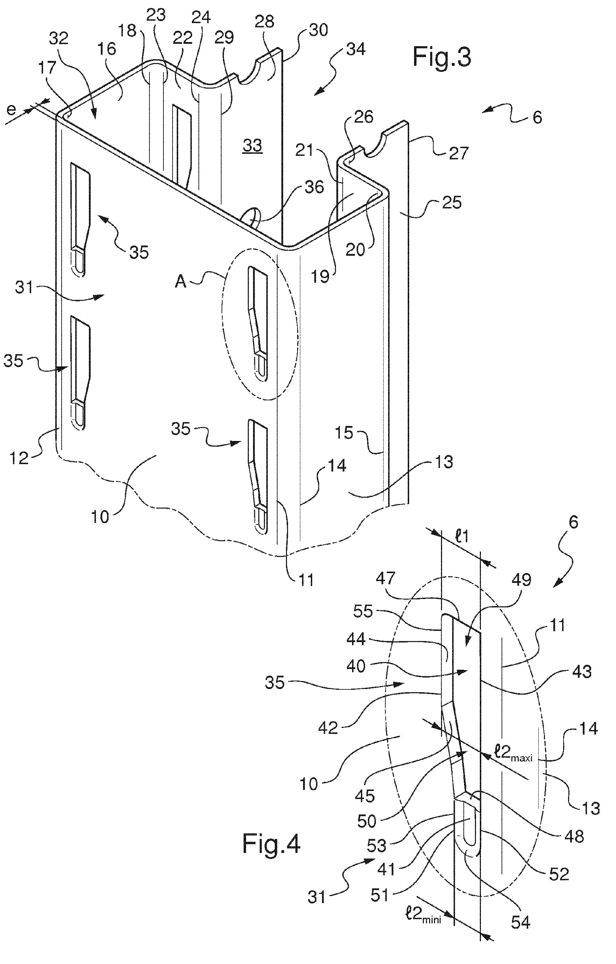

As shown in Figure 3, the vertical column 6 which is here taken partially and isolated, has a general C-shape comprising an external surface 31 and an internal surface 32 which delimits an internal space 33.

The vertical column 6 and comprises a main side 10, a first lateral side 13 and a second lateral side 16 facing each other and each extending from the main side 10, a first back side 19 and a second back side 22 each extending from the respective first and second lateral sides 13 and 16 and facing the main side 10, and a first wall 25 and a second wall 28 each extending outside from the respective first and second back sides 19 and 22.

The main side 10 extends in the longitudinal direction and has a first end 11 and a second end 12 which is opposite to the first end 11.

The main side 10 comprises a plurality of receiving and retaining members 35 which are located vertically regularly by couple between the top and the bottom of the lateral panel 3 and in the vicinity of both first and second ends 11 an 12.

In other words, one receiving and retaining member 35 of each couple of receiving and retaining members 35 is close to the first end 11 and the other receiving and retaining member 35 of each couple of receiving and retaining members 35 is close to the second end 12.

The first lateral side 13 extends substantially perpendicularly from the main side 10 and has a first end 14 and a second end 15 which is opposite to the first end 14. The first end 14 of the first lateral side 13 is attached to the first end 11 of the main side 10.

The second lateral side 16 extends substantially perpendicularly from the main side 10 and has a first end 17 and a second end 18 which is opposite to the first end 17. The first end 17 of the second lateral side 16 is attached to the second end 12 of the main side 10.

The first back side 19 extends substantially perpendicularly from the first lateral side 13, faces the main side 10, and has a first end 20 and a second end 21 which is opposite to the first end 20. The first end 20 of the first back side 19 is attached to the second end 15 of the first lateral side 13.

The second back side 22 extends substantially perpendicularly from the second lateral side 16, faces the main side 10, and has a first end 23 and a second end 24 which is opposite to the first end 23. The first end 23 of the second back side 22 is attached to the second end 18 of the second lateral side 16.

Each of the first and second back sides 19 and 22 comprises a plurality of receiving and retaining members 35 which are located vertically regularly between the top and the bottom of the lateral panel 3.

The receiving and retaining members 35 formed on the first and second back sides 19 and 22 are each configured to face a receiving and retaining members 35 formed on the main side 10.

In particular, each receiving and retaining members 35 provided in the first back side 19 faces a receiving and retaining members 35 provided in the vicinity of the first end 11 of the main side 10; while each receiving and retaining members 35 provided in the second back side 22 faces a receiving and retaining members 35 provided in the vicinity of the second end 12 of the main side 10.

The first wall 25 extends substantially perpendicularly from the first back side 19 and has a first end 26 and a second free end 27 which is opposite to the first end 26. The first end 26 of the first wall 25 is attached to the second end 21 of the first back side 19.

The second wall 28 extends substantially perpendicularly from the second back side 22, faces the first wall 25, and has a first end 29 and a second free end 30 which is opposite to the first end 29. The first end 29 of the second wall 28 is attached to the second end 24 of the second back side 22.

Each of the first and second walls 25 and 28 comprises a plurality of fastening holes 36 located vertically regularly between the top and the bottom of the lateral panel 3; and each fastening holes 36 provided in the first wall 25 faces a fastening holes 36 provided in the first wall 28 in order to form a pair of fastening holes 36.

The vertical column 6 is configured so that the first and second walls 25 and 26 extend remote to the internal space 33 and remote to each other, a predetermined gap 34 being defined between them.

The vertical column 6 has a constant thickness e in a range comprised between around 1 mm and around 2mm, and preferably, the thickness e of the vertical column 6 is equal to around 1.5mm.

We will now describe in details one receiving and retaining member 35 in reference to Figure 4.

The receiving and retaining member 35 comprises an opening 40 and a stamped portion 41 provided close to the opening 40.

The receiving and retaining member 35 has an outline (not illustrated) which is defined by both the opening 40 and the stamped portion 41.

The opening 40 has a contour 42 comprising a first vertical edge 43, a second vertical edge 44 and a tightened edge 45 which are opposite to the first vertical edge 43, a top edge 47 and a bottom edge 48 which is opposite to the top edge 47.

The opening 40 is configured so that the top edge 47 links the first vertical edge 43 to the second vertical edge 44 and the bottom edge 48 links the first vertical edge 43 to the third vertical edge 46.

In particular, the tightened edge 45 here comprises an inclined portion linked to the second vertical edge 44 and a vertical portion linked to the bottom edge 48.

The inclined portion of the tightened edge 45 is disposed between the second vertical edge 44 and the vertical portion of the tightened edge 45.

The opening 40 comprises an access window 49 which is defined at least by the first vertical edge 43, the second vertical edge 44 and the top edge 47. The access window 49 has a predetermined width I₁ similar to the width of the top edge 47.

The opening 40 further comprises a guiding window 50 which is located between the access window 49 and the stamped portion 41 and defined at least by the first vertical edge 43, the tightened edge 45 and the bottom edge 48.

The guiding window 50 has a variable width I₂ in the range comprised between I₂ₘₐₓᵢ (in the vicinity of the inclined portion) and I₂ₘᵢₙᵢ (in the vicinity of the vertical portion), I₂ being lower than the width I₁ of the access window 49.

The stamped portion 41 has a contour 51 comprising a first edge 52, a second edge 53 which is opposite to the first edge 52, a lower edge 54 and an upper edge 48 which is opposite to the lower edge 54.

Each of the lower and upper edges 54 and 48 links both the first edge 52 and the second edge 53.

The upper edge 48 of the stamped portion 41 is common to the bottom edge 48 of the opening 40.

The first edge 52 extends from the first vertical edge 43 of the opening 40 and the second edge 53 extends from the vertical portion of the tightened edge 45 of the opening 40.

Here, the stamped portion 41 protrudes from the internal surface 32 of the vertical column 6 and thus, the stamped portion 41 is recessed relative to the external surface 31 of the vertical column 6.

The stamped portion 41 is configured to be shifted both from the internal surface 32 and external surface 31 of a depth value d in a range comprised between around 0.25mm and around 0.75mm, and preferably, the depth value d is equal to around 0.5mm.

We will now describe, first the assembly of spacers 7 with a vertical column 6 to form a lateral panel 3 in reference to Figure 5, and next, the assembly of a beam 4 with the vertical column 6 of the lateral panel 3 to form the shelving device in reference to Figures 6 and 7.

Figure 5 shows a lower spacer 7 and an inclined spacer 7 fixedly attached to a vertical column 6.

The respective ends 8 of the two spacers 7 are inserted into the gap 34 and the internal space 33 and sandwiched between the respective first and second wall 19 and 22.

The fastening piece here formed by a screw 56 is inserted through both a pair of fastening holes 36 provided in the first and second wall 19 and 22 and the apertures (not illustrated) of the ends 8 of the spacers 7.

The two spacers 7 are fastened to the vertical column 6 in a configuration in which at least a projection 9 of the inclined spacer 7 come into abutment against an upper edge of the horizontal spacer 7.

All the spacers 7 are each fastened to two vertical columns to form a lateral panel 3.

Figures 6 and 7 show the assembly of a beam and a vertical column 6 of a lateral panel 3, respectively in an insertion configuration and in a blocking configuration.

The beam 4 comprises a body 60 having a front side 61 and a back side 62 opposite to the front side 61 and two fastening members located at either sides of the body 60, the fastening members being here formed by hooks 63.

Each hook 63 comprises a base 64 protruding from the back side 62 of the body 60 of the beam 4, and a vertical extension 65 which extends from the base 64 and remote to the body 60.

In particular, the base 64 extends perpendicularly from the back side 62 and presents an end 66 which is opposite to the back side 62; the vertical extension 65 extends perpendicularly downwardly from the end 66 and comprises a free end 67.

The vertical extension 65 is shifted of a length L from the back side 62 of the beam 4 in order to form a notch 68.

The length L of the notch 68 is substantially in a range comprised between around 1.25mm and 2.75mm, and preferably, the length L is equal to around 2mm, which is the addition of the thickness e, preferably here 1.5mm, of the vertical column 6 and the depth value d, preferably here of 0.5mm, of the stamped portion 41.

It will be noted that the base 64 has here a width (not illustrated) which is substantially equal to the width I₂ of the guiding window 50 of the opening 40.

First, the beam 4 is in a first position where the hook 63 is received in a receiving and retaining member 35.

In particular, the hook 63 is inserted through the access window 49 of the opening 40 of the receiving and retaining member 35 until the back side 62 of the beam 4 comes into abutment against the external surface 32 of the vertical column 6 at the level of the main side 10.

The beam 4 is here in an insertion configuration in which the vertical extension 65 is located in the internal space 33 of the vertical column 6 and the base 64 is located in the access window 49 close to the top edge 47 of the opening 40.

Then, the beam 4 is moved from the first position to a second position where the hook 63 is retained in the receiving and retaining member 35.

In particular, the base 64 of the hook 63 is translated downwardly in the guiding window 50 until the vertical extension 65 frictionally engages with the internal surface 32 of the vertical column 6 at the level of the stamped portion 41 of the receiving and retaining member 35.

The beam 4 is here in a blocking configuration in which the vertical extension 65 is located in the internal space 33 of the vertical column 6 and the base 64 is located in the guiding window 50 close to the bottom edge/upper edge 48 of the opening 40/stamped portion 41.

The thickness e of the main side 10 and the depth value d of the stamped portion 41 are configured to partially fill the notch 68 of the hook 63; by virtue of which the beam 4 is rigidly fastened to the vertical column 6.

In variants that are not illustrated:
- the contour of the opening of each receiving and retaining member comprises a first tightened edge which extends from the second vertical edge and a second tightened edge which extends from the first vertical edge and is opposite to the first tightened edge, the first edge of the stamped portion extending from the second tightened edge rather than the first vertical edge;
- the contour of the opening of each receiving and retaining member is devoid of vertical portion in the tightened portion, the second edge of the stamped portion extending directly from the inclined portion;
- a portion of the main side of the vertical column separates the opening from the stamped portion of each receiving and retaining member, the outline of each receiving and retaining member being defined by the contours of the opening, the stamped portion and the separate portion of main side;
- the stamped portion of each receiving and retaining member protrudes the external surface of the vertical column rather the internal surface;
   and/or
- the vertical column comprises only one wall extending from a lateral side and the spacers are attached on one side of the wall.

It should be noted more generally that the invention defined by the appended claims is not limited to the examples described and represented.

## Claims

1. Vertical column configured to equip a lateral panel (3) that comprises a shelving device (1), said vertical column (6) having at least one opening (40) configured to receive a fastening member (63) of a beam (4) that further comprises said shelving device (1) for assembling said beam (4) to said vertical column (6), said vertical column (6) comprises at least one receiving and retaining member (35) having said at least one opening (40) and at least one stamped portion (41) provided close to said at least one opening (40), said at least one stamped portion (41) protruding from one of an external surface (31) and an internal surface (32) of said vertical column (6) which are opposite, and being configured to retain said fastening member (63) of said beam (4); wherein said at least one receiving and retaining member (35) has an outline (55) which is defined by both said at least one opening (40) and said at least one stamped portion (41); said at least one opening (40) comprises an access window (49) and a guiding window (50), said guiding window (50) being located between said access window (49) and said at least one stamped portion (41); **characterised in that** said at least one opening (40) has a contour (42) comprising a first vertical edge (43), a second vertical edge (44), and **in that** the contour has either a tightened edge (45) linked to the second vertical edge (44) and comprising an inclined portion having a constant angle of inclination and a second edge (53) of the stamped portion (41) extending directly from the inclined portion, or a tightened edge having an inclined portion linked to the second vertical edge (44) and a vertical portion linked to the bottom edge (48), the second vertical edge (44) and tightened edge (45) being opposite to the first vertical edge (43), a top edge (47) and a bottom edge (48) which are opposite, said top edge (47) linking said first vertical edge (43) and said second vertical edge (44), and said bottom edge (48) linking said first vertical edge (43) and said tightened edge (45); said access window (49) being defined at least by said first vertical edge (43) and said second vertical edge (44), and said guiding window (50) being defined at least by said first vertical edge (43) and said tightened edge (45); and said at least one stamped portion (41) has a contour (51) comprising a first edge (52) extending from said first vertical edge (43) of said at least one opening (40), the second edge (53) being opposite to said first edge (52) and extending from said tightened edge (45) of said at least one opening (40), an upper edge (48) linking said first (52) and second (53) edges and which is similar to said bottom edge of said at least one opening (40), and a lower edge (54) opposite to said upper edge (48) and linking said first (52) and second (53) edges.

2. Vertical column according claim 1, wherein it has a general C-shape and comprises a main side (10) having said at least one receiving and retaining member (35), two lateral sides (13, 16) each extending from said main side (10) and facing each other, and two back sides (19, 22) each extending from one said lateral side (13, 16) and facing said main side (10).

3. Vertical column according to claim 2, wherein said main side (10) comprises a plurality of said receiving and retaining members (35) located vertically regularly by couple.

4. Vertical column according to one of claims 2 and 3, wherein at least one of said two back sides (19, 22) comprises at least one said receiving and retaining member (35) facing said at least one receiving and retaining member (35) of said main side (10).

5. Vertical column according to any one of claims 2 to 4, wherein it further comprises at least one wall (25, 28) extending outside from one of said two back sides (19, 22) and having a plurality of fastening holes (36) which are configured to receive a fastening piece (56) for assembling at least one spacer (7) that further comprises said lateral panel (3) with said vertical column (6).

6. Vertical column according to any one of claims 1 to 5, wherein it has a thickness in a range comprised between around 1 mm and around 2mm and said at least one stamped portion (41) is shifted from said external (31) or internal (32) surface of a value in a range comprised between around 0.25mm and around 0.75mm.

7. Lateral panel configured to equip a shelving device (1), comprising two vertical columns (6) according to any one of claims 1 to 6 and at least one spacer (7) disposed between and fastened to both two vertical columns (6).

8. Lateral panel according to claim 7, wherein each of said two vertical columns (6) has a general C-shape and comprises a main side (10), two lateral sides (13, 16) each extending from said main side (10) and facing each other, two back sides (19, 22) each extending from one said lateral side (13, 16) and facing said main side (10), and two walls (25, 28) each extending outside from one of said two back sides (19, 22), said at least one spacer (7) having end portions (8) which are each sandwiched between respective said two walls (25, 28).

9. Shelving device comprising at least two lateral panels (3) according to one of claims 7 and 8, and a plurality of beams (4) having fastening members (63) configured to be received and retained into respective receiving and retaining members (35) of said two vertical columns (6).

10. Shelving device according to claim 9, wherein said fastening members are formed by hooks (63) which each comprises a base (64) protruding from a body (60) of a respective beam (4) and a vertical extension (65) which extends from said base (64) and remote to said body (60); said body (60) being configured to come into abutment against said external surface (31) of said vertical column (6) and said vertical extension (65) being configured to frictionally engage with said internal surface (32) of said vertical column (6) at the level of said at least one stamped portion (41) of said at least one receiving and retaining member (35).

## Patentansprüche

1. Vertikale Säule zum Anbringen einer seitlichen Platte (3), die Teil einer Regalvorrichtung (1) ist, wobei die vertikale Säule (6) zumindest eine Öffnung (40) aufweist, die zum Aufnehmen eines Befestigungsbauteils (63) eines Trägers (4) ausgebildet ist, der ebenfalls Teil der Regalvorrichtung (1) ist, um den Träger (4) an der vertikalen Säule (6) zu montieren, wobei die vertikale Säule (6) wenigstens ein Aufnahme- und Haltebauteil (35) mit der zumindest einen Öffnung (40) und zumindest einem geprägten Bereich (41) nahe der zumindest einen Öffnung (40) umfasst, wobei der zumindest eine geprägte Bereich (41) von einer Außenfläche (31) oder einer Innenfläche (32), welche entgegengesetzt sind, der vertikalen Säule (6) hervorsteht und dazu ausgebildet ist, das Befestigungsbauteil (63) des Trägers (4) zu halten, wobei das wenigstens eine Aufnahme- und Haltebauteil (35) einen Umriss (55) hat, der sowohl durch die zumindest eine Öffnung (40) als auch den zumindest einen geprägten Bereich (41) festgelegt ist, wobei die zumindest eine Öffnung (40) ein Zutrittsfenster (49) und ein Führungsfenster (50) umfasst, wobei das Führungsfenster (50) sich zwischen dem Zugangsfenster (49) und dem zumindest einen geprägten Bereich (41) befindet,
**dadurch gekennzeichnet, dass** die zumindest eine Öffnung (40) eine Kontur (42) mit einem ersten vertikalen Rand (43) und einem zweiten vertikalen Rand (44) hat, und dass die Kontur entweder einen sich verengenden, mit dem zweiten vertikalen Rand (44) verbundenen Rand (45) aufweist, der einen geneigten Abschnitt mit einem konstanten Neigungswinkel hat, und einen zweiten Rand (53) des geprägten Bereichs (41) umfasst, der sich unmittelbar von dem geneigten Abschnitt erstreckt, oder einen sich verengenden Rand mit einem geneigten Abschnitt, der mit dem zweiten vertikalen Rand (44) verbunden ist, sowie einen vertikalen Abschnitt hat, der mit dem Bodenrand (48) verbunden ist, wobei der zweite vertikale Rand (44) und der sich verengende Rand (45) dem ersten vertikalen Rand (43) gegenüber liegen, ein oberer Rand (47) und ein Bodenrand (48) sich gegenüber liegen, wobei der obere Rand (47) den ersten vertikalen Rand (53) mit dem zweiten vertikalen Rand (44) verbindet, und wobei der Bodenrand (48) den ersten vertikalen Rand (43) und den sich verengenden Rand (45) miteinander verbindet, wobei das Zugangsfenster (49) festgelegt ist durch zumindest den ersten vertikalen Rand (43) und den zweiten vertikalen Rand (44), und wobei das Führungsfenster (50) festgelegt ist zumindest durch den ersten vertikalen Rand (43) und den sich verengenden Rand (45), und wobei der zumindest eine geprägte Bereich (41) eine Kontur (51) mit einem ersten Rand (52) hat, der sich von dem ersten vertikalen Rand (43) der zumindest einen Öffnung (40) erstreckt, wobei der zweite Rand (53) dem ersten Rand (52) gegenüber liegt und sich von dem sich verengenden Rand (45) der zumindest einen Öffnung (40) erstreckt, wobei ein oberer Rand (48) den ersten Rand (52) und den zweiten Rand (53) miteinander verbindet und dem Bodenrand der zumindest einen Öffnung (40) ähnlich ist, und ein unterer Rand (54) gegenüber dem oberen Rand (48) den ersten Rand (52) und den zweiten Rand (53) miteinander verbindet.

2. Vertikale Säule nach Anspruch 1, die eine allgemein Förmige Gestalt hat und eine Hauptseite (10) mit dem wenigstens einen Aufnahme- und Haltebauteil (35), zwei Seitenflächen (13, 16), die sich jeweils von der Hauptseite (10) erstrecken und einander zugewandt sind, und zwei Rückseiten (19, 22) umfasst, die sich jeweils von einer Seitenfläche (13, 16) erstrecken und der Hauptseite (10) zugewandt sind.

3. Vertikale Säule nach Anspruch 2, bei der die Hauptseite (10) eine Mehrzahl der Aufnahme- und Haltebauteile (35) umfasst, die vertikal regelmäßig und paarweise angeordnet sind.

4. Vertikale Säule nach einem der Ansprüche 2 und 3, bei der zumindest eine der zwei Rückseiten (19, 22) wenigstens ein Aufnahme- und Haltebauteil (35) aufweist, welches dem wenigstens einen Aufnahme- und Haltebauteil (35) der Hauptseite (10) zugewandt ist.

5. Vertikale Säule nach einem der Ansprüche 2 bis 4, die ferner zumindest eine Wand (25, 28) aufweist, welche sich außerhalb einer der zwei Rückseiten (19, 22) erstreckt und eine Mehrzahl Befestigungslöcher (36) hat, die dazu ausgebildet sind, ein Befestigungsstück (56) zur Montage wenigstens eines Abstandshalters (7) aufzunehmen, der ferner die seitliche Platte (3) mit der vertikalen Säule (6) umfasst.

6. Vertikale Säule nach einem der Ansprüche 1 bis 5, die eine Dicke in einem Bereich zwischen ungefähr 1 mm und ungefähr 2 mm hat, wobei der zumindest eine geprägte Bereich (41) von der Außenfläche (31) oder der Innenfläche (32) um ein Maß versetzt ist, welches in einem Bereich zwischen ungefähr 0,25 mm und ungefähr 0,75 mm liegt.

7. Seitliche Platte zum Ausrüsten einer Regalvorrichtung (1), mit zwei vertikalen Säulen (6) nach einem der Ansprüche 1 bis 6 und wenigstens einem Abstandshalter (7), der zwischen den zwei vertikalen Säulen (6) angeordnet und an ihnen befestigt ist.

8. Seitliche Platte nach Anspruch 7, wobei jede der zwei vertikalen Säulen (6) eine allgemein C-förmige Gestalt hat und eine Hauptseite (10), zwei Seitenflächen (13, 16), die sich jeweils von der Hauptseite (10) erstrecken und einander zugewandt sind, zwei Rückseiten (19, 22), die sich je von einer Seitenfläche (13, 16) erstrecken und der Hauptseite (10) zugewandt sind, und zwei Wände (25, 28) umfasst, die sich jeweils außerhalb einer der beiden Rückseiten (19, 22) erstrecken, wobei der wenigstens eine Abstandshalter (7) Endabschnitte (8) hat, die zwischen zugehörigen der zwei Wände (25, 28) sandwichartig aufgenommen sind.

9. Regalvorrichtung mit wenigstens zwei seitlichen Platten (3) nach einem der Ansprüche 7 und 8 und mehreren Trägern (4) mit Befestigungsbauteilen (63), die dazu ausgebildet sind, in zugehörigen Aufnahme- und Haltebauteilen (35) der zwei vertikalen Säulen (6) aufgenommen und gehalten zu werden.

10. Regalvorrichtung nach Anspruch 9, bei der die Befestigungsbauteile durch Haken (63) gebildet sind, die jeweils eine von einem Körper (60) eines zugehörigen Trägers (4) hervorstehende Basis (64) und eine vertikale Verlängerung (65) umfassen, die sich von der Basis (64) und entfernt vom Körper (60) erstreckt, wobei der Körper (60) dazu ausgebildet ist, an der Außenfläche (31) der vertikalen Säule (6) in Anlage zu kommen und die vertikale Verlängerung (65) dazu ausgebildet ist, reibschlüssig mit der Innenfläche (32) der vertikalen Säule (10) auf der Höhe des zumindest einen geprägten Bereichs (41) des wenigstens einen Aufnahme- und Haltebauteils (35) in Eingriff zu kommen.

## Revendications

1. Montant vertical configuré pour équiper un panneau latéral (3) qui comprend un dispositif de rayonnage (1), ledit montant vertical (6) comportant au moins une ouverture (40) configurée pour recevoir un organe de fixation (63) d'un longeron (4) que comporte en outre ledit dispositif de rayonnage (1) pour assembler ledit longeron (4) audit montant vertical (6), ledit montant vertical (6) comprenant au moins un organe de réception et de retenue (35) comportant ladite au moins une ouverture (40) et au moins une partie poinçonnée (41) située à proximité de ladite au moins une ouverture (40), ladite au moins une partie poinçonnée (41) faisant saillie depuis une surface externe (31) ou une surface interne (32) dudit montant vertical (6) qui sont opposées, et étant configurée pour retenir ledit organe de fixation (63) dudit longeron (4) ;
ledit au moins un organe de réception et de retenue (35) ayant un contour (55) qui est défini à la fois par ladite au moins une ouverture (40) et ladite au moins une partie poinçonnée (41) ; ladite au moins une ouverture (40) comprenant une fenêtre d'accès (49) et une fenêtre de guidage (50), ladite fenêtre de guidage (50) étant située entre ladite fenêtre d'accès (49) et ladite au moins une partie poinçonnée (41) ;
**caractérisé en ce que** ladite au moins une ouverture (40) présente un contour (42) comprenant un premier bord vertical (43), un deuxième bord vertical (44), et **en ce que** le contour présente soit un bord resserré (45) raccordé au deuxième bord vertical (44) et comprenant une partie inclinée ayant un angle d'inclinaison constant et un deuxième bord (53) de la partie poinçonnée (41) s'étendant directement depuis la partie inclinée, soit un bord resserré comportant une partie inclinée raccordée au deuxième bord vertical (44) et une partie verticale raccordée au bord inférieur (48), le deuxième bord vertical (44) et le bord resserré (45) étant opposés au premier bord vertical (43), un bord supérieur (47) et un bord inférieur (48) qui sont opposés, ledit bord supérieur (47) raccordant ledit premier bord vertical (43) et ledit deuxième bord vertical (44), et ledit bord inférieur (48) raccordant ledit premier bord vertical (43) et ledit bord resserré (45) ; ladite fenêtre d'accès (49) étant définie au moins par ledit premier bord vertical (43) et ledit deuxième bord vertical (44), et ladite fenêtre de guidage (50) étant définie au moins par ledit premier bord vertical (43) et ledit bord resserré (45) ; et ladite au moins une partie poinçonnée (41) présentant un contour (51) comprenant un premier bord (52) s'étendant depuis ledit premier bord vertical (43) de ladite au moins une ouverture (40), le deuxième bord (53) étant opposé audit premier bord (52) et s'étendant depuis ledit bord resserré (45) de ladite au moins une ouverture (40), un bord supérieur (48) raccordant lesdits premier (52) et deuxième (53) bords et qui est similaire audit bord inférieur de ladite au moins une ouverture (40), et un bord inférieur (54) opposé audit bord supérieur (48) et raccordant lesdits premier (52) et deuxième (53) bords.

2. Montant vertical selon la revendication 1, dans lequel le montant a une forme générale de C et comprend un côté principal (10) pourvu dudit au moins un organe de réception et de retenue (35), deux côtés latéraux (13, 16) s'étendant chacun depuis ledit côté principal (10) et en regard l'un de l'autre, et deux côtés arrière (19, 22) s'étendant chacun depuis l'un desdits côtés latéraux (13, 16) et en regard dudit côté principal (10).

3. Montant vertical selon la revendication 2, dans lequel ledit côté principal (10) comprend une pluralité de dits organes de réception et de retenue (35) situés verticalement et régulièrement par paire.

4. Montant vertical selon l'une des revendications 2 et 3, dans lequel au moins l'un desdits deux côtés arrière (19, 22) comprend au moins un dit organe de réception et de retenue (35) en regard dudit au moins un organe de réception et de retenue (35) dudit côté principal (10).

5. Montant vertical selon l'une quelconque des revendications 2 à 4, comprenant en outre au moins une paroi (25, 28) s'étendant à l'extérieur depuis l'un desdits deux côtés arrière (19, 22) et comportant une pluralité de trous de fixation (36) qui sont configurés pour recevoir une pièce de fixation (56) destinée à l'assemblage d'au moins un écarteur (7) que comprend en outre ledit panneau latéral (3) avec ledit montant vertical (6).

6. Montant vertical selon l'une quelconque des revendications 1 à 5, le montant ayant une épaisseur dans une plage comprise entre environ 1 mm et environ 2 mm et ladite au moins une partie poinçonnée (41) étant décalée depuis ladite surface externe (31) ou surface interne (32) d'une valeur dans une plage comprise entre environ 0,25 mm et environ 0,75 mm.

7. Panneau latéral configuré pour équiper un dispositif de rayonnage (1), comprenant deux montants verticaux (6) selon l'une quelconque des revendications 1 à 6 et au moins un écarteur (7) disposé entre les deux montants verticaux (6) et fixé à ceux-ci.

8. Panneau latéral selon la revendication 7, dans lequel chacun desdits deux montants verticaux (6) a une forme générale de C et comprend un côté principal (10), deux côtés latéraux (13, 16) s'étendant chacun depuis ledit côté principal (10) et en regard l'un de l'autre, deux côtés arrière (19, 22) s'étendant chacun depuis l'un desdits côtés latéraux (13, 16) et en regard dudit côté principal (10), et deux parois (25, 28) s'étendant chacune à l'extérieur depuis l'un desdits deux côtés arrière (19, 22), ledit au moins un écarteur (7) comportant des parties d'extrémité (8) qui sont chacune prises en sandwich entre lesdites deux parois (25, 28) respectives.

9. Dispositif de rayonnage comprenant au moins deux panneaux latéraux (3) selon l'une quelconque des revendications 7 et 8, et une pluralité de longerons (4) comportant des organes de fixation (63) configurés pour être reçus et retenus dans des organes de réception et de retenue respectifs (35) desdits deux montants verticaux (6).

10. Dispositif de rayonnage selon la revendication 9, dans lequel lesdits organes de fixation sont formés par des crochets (63) qui comprennent chacun une base (64) faisant saillie depuis un corps (60) d'un longeron respectif (4) et une extension verticale (65) qui s'étend depuis ladite base (64) et à distance dudit corps (60) ; ledit corps (60) étant configuré pour venir buter contre ladite surface externe (31) dudit montant vertical (6) et ladite extension verticale (65) étant configurée pour s'engager par friction avec ladite surface interne (32) dudit montant vertical (6) au niveau de ladite au moins une partie poinçonnée (41) dudit au moins un organe de réception et de retenue (35).
